# FASCICULE DE BREVET EUROPEEN

(11) **EP 3 685 089 B1**
(45) Date de publication et mention de la délivrance du brevet: **04.08.2021**
(21) Numéro de dépôt: 18779607.3
(22) Date de dépôt: 23.09.2018
(51) Int. Cl.: F16L 55/168, B29C 63/02, B29C 63/10, B29C 63/14, F16L 55/18, F16L 1/26

(54) **DISPOSITIF POUR FACILITER LA RÉPARATION DES PIPELINES**
VORRICHTUNG ZUR ERMÖGLICHUNG DER ROHRLEITUNGSREPARATUR
DEVICE FOR FACILITATING PIPELINE REPAIR

(30) Priorité: 24.09.2017 FR 1771010
(43) Date de publication de la demande: 29.07.2020
(73) Titulaire: 3x Engineering, 98000 Monaco (FR)
(72) Inventeur: BOULET D'AURIA, Stanislas, 06230 Villefranche Sur Mer (FR); SLIMANI, Hacen, 06000 Nice (FR)
(74) Mandataire: Bonneau, Florence
(86) Numéro de dépôt international: PCT/EP2018/075715
(87) Numéro de publication internationale: WO 2019/057949

(56) Documents cités:
- WO-A1-2013/182831
- FR-A1- 2 640 243
- US-A- 4 125 422

## Description

### Domaine technique

La présente invention concerne la réparation des pipelines et conduites destinés à transporter des fluides ou du gaz sous pression et concerne en particulier un dispositif pour faciliter la réparation des pipelines.

### Etat de la technique

Les pipelines ou conduites qui transportent du gaz ou du liquide sous pression sur de longues distances sont soumis à des dégradations telles que la corrosion intérieure et extérieure ou à des chocs. Il arrive souvent que la conduite soit endommagée au point de provoquer une fuite de son contenu. Des solutions de réparation se sont développées afin de stopper ces fuites locales. Par exemple, par enroulement d'une bande de renforcement autour de la conduite à l'endroit de la fuite. Pour être efficace, cette bande est enroulée en hélice autour de la conduite en se chevauchant sur une longueur de conduite englobant largement l'endroit de la fuite et plusieurs couches de bandes sont superposées les unes sur les autres.

Un appareil pour enrouler une bande autour d'une canalisation est connu du document WO2011049668. Il décrit un appareil comprenant une tête d'enroulement alimentant une bande de matériau à travers la tête d'enroulement fixant une extrémité de la bande de matière à la conduite existante. La bande est enroulée en hélice autour de la conduite en tournant la tête d'enroulement et en la déplaçant axialement par rapport à la conduite. Pour effectuer une passe supplémentaire, l'appareil d'enroulement est renvoyé à la position de départ sur la conduite et la seconde passe est appliquée d'une manière similaire à la première. Cet appareil a pour inconvénient de renvoyer la tête d'enroulement à la position de départ de sorte que l'enroulement de la bande autour de la conduite n'est pas continu.

Le document WO2013/182831 décrit un dispositif d'enroulement d'une bande pré-imprégnée polymérisable autour d'une zone de conduite à réparer. Un porte bobine est actionné en rotation autour de la conduite afin d'enrouler la bande pré-imprégnée autour de la zone à réparer. Après que la première passe est effectuée, le porte bobine est actionné en rotation et en translation selon le sens opposé, ce qui permet d'enrouler de manière homogène et avec un pas d'enroulement régulier la bande selon une seconde passe par dessus la première. Le chariot est entraîné en translation dans la direction longitudinale de la conduite sous l'action d'une vis entraînée par le mouvement de rotation du dispositif et par un système d'engrenage. Le changement de sens du chariot se fait grâce au changement de sens de rotation de la vis. Ce changement de sens de rotation de la vis est effectué par l'opérateur qui actionne une boîte de vitesse qui inverse un pignon. L'inconvénient d'un tel dispositif réside dans le fait que l'inversion de sens est manuelle. De plus, la rotation du dispositif doit être stoppée au moment de l'inversion de sens. En outre, il arrive que le porte bobine se coince parfois en fin de vis. En effet, lorsque l'opération de réparation est réalisée sous l'eau, la visibilité n'est pas bonne et les plongeurs ne voyant pas que le porte bobine arrive en fin de course ne ralentissent pas le mouvement et l'effort apporté coince le porte bobine en fin du filetage. Ceci demande ensuite l'intervention de l'opérateur et un effort supplémentaire de la part des plongeurs s'il s'agit d'une réparation sous-marine pour débloquer le porte-bobine.

### Exposé de l'invention

C'est pourquoi le but de l'invention est de réaliser un dispositif d'enroulement d'une bande composite autour d'une conduite qui comprend des moyens pour que le porte bobine change automatiquement de sens sans que l'opérateur n'intervienne pour ce changement de sens et sans que l'actionnement du dispositif autour de la conduite ne soit stoppée.

L'objet de l'invention est donc un dispositif d'enroulement d'une bande de renforcement sur une longueur de réparation de part et d'autre d'une partie à réparer d'une conduite comprenant :
- un chariot solidaire d'un porte-bobine,
- une bobine de bande de renforcement enroulée sur le porte-bobine,
- des moyens d'entraînement du chariot en rotation autour de la circonférence de la conduite et en translation selon l'axe longitudinal de la conduite de façon à ce que la bande s'enroule autour de la conduite sous forme d'une hélice,
- des moyens d'inversion du sens de déplacement en translation du chariot de sorte qu'à chaque changement de sens, le chariot se déplace dans une direction de sens opposé à la précédente et une couche de bande de renforcement est enroulée autour de la conduite en se superposant à la précédente couche.

Selon une caractéristique principale de l'invention les moyens d'entraînement du chariot en translation comprennent en outre une chaîne de convoyage comportant deux brins se déplaçant entre un premier pignon et un second pignon dans des directions de sens opposés et comprennent des moyens mobiles d'accrochage du chariot sur la chaine adaptés pour coopérer avec les brins de la chaine. Selon une autre caractéristique principale de l'invention, les moyens d'inversion déplacent les moyens mobiles d'accrochage du chariot d'un brin à l'autre et inversement de sorte que lorsqu'un des moyens mobiles d'accrochage se désolidarise d'un brin, l'autre moyen mobile d'accrochage coopère avec l'autre brin, les moyens d'inversion étant ainsi actionnés automatiquement pendant la rotation du chariot autour de la conduite.

### Description brève des figures

Les buts, objets et caractéristiques de l'invention apparaîtront plus clairement à la lecture de la description qui suit faite en référence aux dessins dans lesquels :
La figure 1 représente le dispositif selon l'invention selon le mode de réalisation préféré de l'invention,
La figure 2 représente en perspective le chariot du porte bobine selon l'invention,
La figure 3 représente une vue de dessus et les détails des moyens d'entraînement du porte bobine en déplacement selon une première direction,
La figure 4 représente une vue de dessus et les détails des moyens d'entraînement du porte bobine en déplacement selon une seconde direction.

### Description détaillée de l'invention

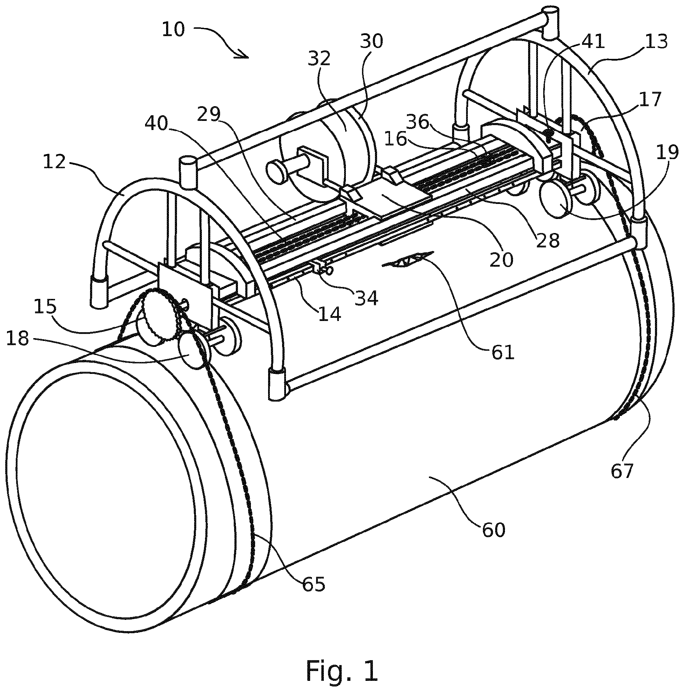

Selon la figure 1, le dispositif objet de l'invention est représenté de façon globale sur une conduite à réparer 60. Selon le mode de réalisation préféré de l'invention, la conduite 60 est une canalisation sous-marine contenant un fluide sous pression de type pipeline. La conduite à réparer peut être également une canalisation terrestre ou un tube tel qu'un mât de bateau ou une colonne verticale. La partie à réparer 61 de la conduite peut être une fissure, un trou dû à la corrosion interne ou externe, un enfoncement ou un choc. Toutes ces causes entraînent une fragilisation de la conduite, voire une fuite du liquide qu'elle contient vers l'extérieur. Le dispositif 10 est placé et fixé de manière amovible sur la conduite 60 de façon à être centré sur la partie à réparer 61. La longueur du dispositif 10 selon l'axe longitudinale de la conduite définit la longueur maximale de la zone de réparation sur laquelle la bande de renforcement va être appliquée. A chacune de ses extrémités, le dispositif 10 comprend des pignons 15 et 17 engagés chacun dans une chaîne 65 et 67, les deux chaînes étant fermées autour de la circonférence extérieure de la conduite, placées de part et d'autre de la partie de conduite à réparer et séparées d'une distance égale à la longueur du dispositif. Les chaînes 65 et 67 permettent le positionnement du dispositif 10 contre la paroi externe de la conduite et la rotation du dispositif 10 autour de la circonférence de la conduite 60. Lorsque le dispositif est mis en mouvement autour de la conduite, il se déplace contre sa paroi externe grâce à deux jeux de roues 18 et 19 situés de chaque côté et à chacune des extrémités du dispositif. Le mouvement de rotation est donné soit par un opérateur qui actionne un des deux demi-volants 12 ou 13 situés chacun aux deux extrémités du dispositif soit par deux opérateurs qui actionnent chacun d'un côté et de façon concomitante les deux demi-volants 12 et 13. Le mouvement de rotation du dispositif autour de la conduite peut également être donné par un moteur non représenté sur la figure.

Le dispositif 10 comprend un porte-bobine mobile 30 sur lequel est enroulée une bande de renforcement 32. La bande de renforcement est une bande de type bande pré-imprégnée polymérisable. Tout autre type de bande peut être utilisé sans sortir du cadre de l'invention. Le porte-bobine 30 comprend des moyens de mise en tension de la bande sur la conduite réglable au fur et à mesure de l'enroulement. Le porte-bobine 30 est fixé de façon solidaire à un chariot 20 pouvant coulisser dans les deux sens le long de moyens de guidage tels qu'au moins un rail de guidage et de préférence deux rails de guidage 28 et 29 de section carrée. Les rails de guidage 28 et 29 sont parallèles à l'axe longitudinal de la conduite. L'axe longitudinal de la conduite est défini pour la suite de la description comme un axe parallèle à l'axe principal local de la conduite à l'endroit de la partie à réparer. Le chariot est limité dans son déplacement le long des rails de guidage par deux butées 34 et 36 situées chacune respectivement sur deux tubes positionneurs 14 et 16. La rotation du dispositif 10 autour de la conduite entraine automatiquement le chariot 20 en rotation autour de la conduite et la bande de renforcement 32 maintenue par le porte-bobine 30 est déroulée et vient s'enrouler en tension autour de la conduite 60. Les demi volants 12 et 13, les pignons 15 et 17 et les chaines 65 et 67 représentent les moyens d'entrainement du chariot en rotation autour de la conduite.

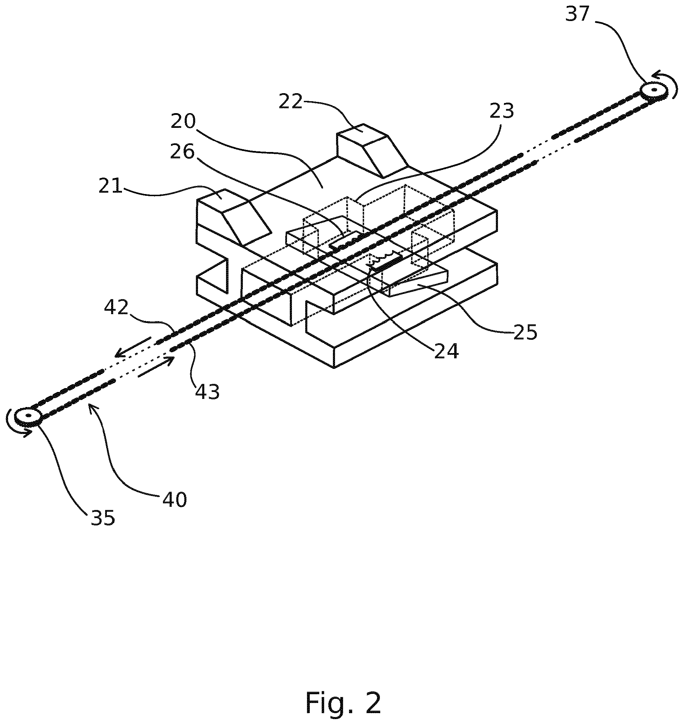

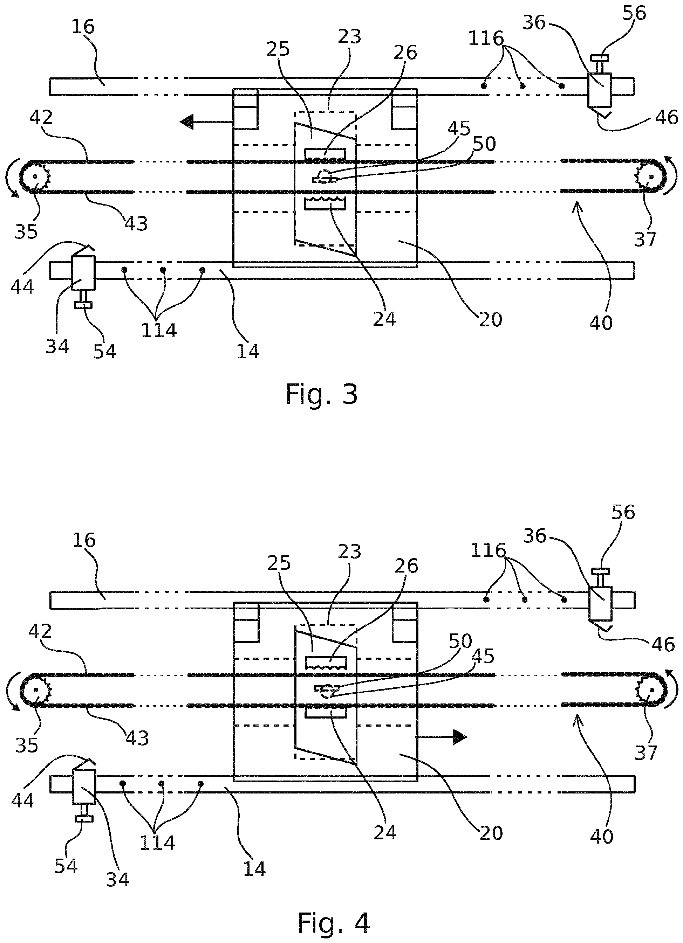

Le dispositif 10 comprend également des moyens d'entraînement du chariot du porte-bobine en translation selon l'axe longitudinal de la conduite le long des rails de guidage. Les moyens d'entraînement du chariot en translation décrits en détail en référence aux figures 2 et 3 comprennent en outre une chaîne de convoyage 40 et sont reliés à au moins un des deux pignons 15 ou 17 par un système d'engrenage non représenté sur les figures. Ainsi, à chaque tour du dispositif autour de la conduite le chariot avance le long des rails de guidage d'un pas régulier de sorte que la bande s'enroule en hélice autour de la conduite. Cependant, les moyens d'entraînement du chariot en translation peuvent être débrayés des pignons 15 ou 17 grâce à un embrayage 41. Les pignons 15 et 17 sont de préférence dimensionnés de telle sorte que lorsque le dispositif 10 fait un tour de conduite, le chariot du porte bobine avance le long des rails d'un pas d'une longueur égale à une demi largeur de bande de renforcement. De cette façon la bande de renforcement est enroulée autour de la conduite en hélice et avec un chevauchement. Lorsque les moyens d'entraînement en translation du chariot sont débrayés, un tour de dispositif autour de la conduite entraîne le porte bobine en rotation uniquement. Ainsi, la bande de renforcement est déroulée et appliquée autour de la conduite sans former une hélice et de manière à revenir à son point de départ et se superposer à elle-même. Cette façon de positionner la bande est appelée un tour mort et est utile au départ du positionnement de la bande et à la fin éventuellement.

Tant que le chariot se déplace le long de ses rails de guidage selon une première direction, la bande est déroulée selon une passe. Dans la suite de la description, chaque passe est définit comme correspondant à une couche de bandes. Selon le mode de réalisation préféré décrit précédemment, la bande est enroulée autour de la conduite sous forme d'une hélice avec un chevauchement égal à une demi largeur de bande, donc chaque couche comprend deux épaisseurs de bande. Dans un autre mode de réalisation, la bande est enroulée en hélice sans chevauchement donc bord à bord donc dans ce cas chaque couche correspondrait à une épaisseur de bande. Pour qu'une seconde couche de bande soit appliquée sur la première, le chariot du porte bobine doit être entraîné en translation le long de ses rails de guidage selon la direction opposée à la première. De même, la troisième couche est appliquée lorsque le chariot du porte bobine arrivant en fin de course change de direction et se déplace en translation selon la première direction et ainsi de suite. De façon générale, pour des réparations sur conduite transportant un fluide sous pression, chaque couche recouvre une longueur de conduite inférieure à la longueur de recouvrement de la couche précédente, et de préférence une longueur égale à la moitié de la couche.

Le dispositif selon l'invention permet la superposition de plusieurs couches nécessaires de bande de renforcement alors qu'il est actionné autour de la conduite dans un seul et même sens de rotation pendant toute la durée de l'opération de réparation dans un mouvement continu, le changement de sens à la fin de chaque couche se faisant automatiquement et sans intervention de l'opérateur. Les détails de cette caractéristique essentielle du dispositif ainsi que les moyens d'entrainement du chariot sont décrits en référence aux figures suivantes.

Selon la figure 2, le chariot 20 est représenté sans le porte bobine fixé par l'intermédiaire de deux pièces 21 et 22 et comprend une cavité 23 représentée en pointillés sur la figure et dans laquelle coulisse une pièce mobile 25. Une partie de la cavité 23 permet également le passage de la chaîne de convoyage 40. La chaîne de convoyage 40 est une chaîne sans fin mobile comportant un premier brin 42 et un second brin 43 se déplaçant entre un premier pignon 35 et un second pignon 37 dans des directions de sens opposé. Dans un mode de réalisation préféré de l'invention, la chaîne de convoyage 40 est de type chaîne à rouleaux de préférence en acier inoxydable. La chaîne de convoyage 40 peut également désigner une chaîne d'un autre type ou une courroie sans fin sans sortir du cadre de l'invention. Pour la suite de la description, la chaîne de convoyage 40 sera nommée simplement chaîne 40. Lorsque les moyens d'entraînement du chariot en translation sont débrayés, les moyens d'entraînement en rotation que sont les pignons 35 et 37 ne tournent plus.

La pièce mobile 25 est coulissante en translation dans la cavité 23 dans une direction de préférence perpendiculaire à la chaîne 40 entre deux positions stables décrites en détail en référence aux figures 3 et 4. La pièce mobile 25 comprend deux engrenages 24 et 26 aptes à coopérer chacun avec respectivement les brins 42 et 43 de la chaîne. Le premier engrenage 26 est adapté pour coopérer avec le premier brin 42 tandis que le second engrenage 24 est adapté pour coopérer avec le second brin 43. Lorsque la pièce mobile 25 est dans une des deux positions stables, au moins un des 2 engrenages coopère avec un des brins de la chaîne de sorte que, si la chaîne est en mouvement, le chariot est entraîné et se déplace dans le sens du brin sur lequel la pièce mobile est accrochée. Les moyens d'entraînement en translation du chariot 20 comprennent donc des moyens mobiles d'accrochage du chariot sur la chaîne 40, que sont les engrenages 24 et 26 fixés à la pièce mobile 25.

Les figures 3 et 4 représentent respectivement le chariot 20 entrainé en déplacement par la chaine 40 dans une direction longitudinale le long de la conduite, de droite à gauche sur la figure 3, et dans le sens inverse sur la figure 4. En regard de ces figures, sont décrits les moyens d'inversion du sens de déplacement en translation du chariot. Le chariot 20 se déplace le long des deux rails de guidage non représentés sur les figures 3 et 4 et parallèlement à un premier tube positionneur 14 et à un second tube positionneur 16. Les deux tubes positionneurs sont parallèles aux deux brins de la chaîne et sont également parallèles aux rails de guidage et à l'axe longitudinal de la conduite. Les pignons 35 et 37 qui entraînent la chaîne 40 tournent toujours dans le même sens. Les tubes positionneur 14 et 16 sont équipés respectivement d'une butée 34 et 36. Les butées 34 et 36 sont fixes mais peuvent coulisser le long de leur tube respectif et leur position est bloquée sur le tube à l'endroit de trous prédéfinis 114 dans le tube 14 et 116 dans le tube 16, les trous étant séparés d'une distance constante de préférence égale à 25mm. A cet effet, les butées 34 et 36 sont munies chacune respectivement d'un doigt d'indexage 54 et 56 montée sur ressort qui, lorsqu'il est tiré par un opérateur, autorise son déplacement le long du tube positionneur respectif 14 ou 16 et, lorsqu'il est lâché et positionné devant un trou 114 ou 116, bloque la butée sur le tube 14 ou 16. La pièce mobile 25 est contrainte par les parois latérales de la cavité 23 et peut se déplacer en translation entre deux positions stables illustrées respectivement par les figures 3 et 4. Les deux positions stables de la pièce 25 sont maintenues grâce à l'attraction d'un aimant 45 solidaire de la pièce 25 et d'un aimant 50 solidaire du chariot 20 mais pas solidaire de la pièce 25. L'aimant 45 est mobile par rapport à l'aimant 50 appelé aimant fixe dans la suite de la description. L'aimant fixe 50 est situé sur le chariot 20 de façon à être à égale distance des brins 42 et 43 de la chaîne 40 et en regard de la pièce mobile 25. L'aimant fixe 50 est par exemple à magnétisation radiale de sorte que l'aimant mobile 45 est attiré sur les bords de l'aimant fixe 50 et repoussé par son centre. Sur la figure 3, la pièce mobile est maintenue grâce aux aimants 45 et 50 dans une première position stable de sorte que l'engrenage 26 coopère avec le brin 42 de la chaîne 40. La pièce mobile est donc entraînée par la chaîne 40 et entraîne le chariot 20 dans une première direction, de droite à gauche sur la figure. Tandis que, sur la figure 4, la pièce mobile est maintenue grâce aux aimants 45 et 50 dans la seconde position stable de sorte que dans cette position l'engrenage 24 coopère avec le brin 43 de la chaine 40. La pièce mobile est donc entraînée par la chaîne 40 et entraîne le chariot 20 dans la direction de sens opposé à la première, de gauche à droite sur la figure. La pièce mobile 25 est dimensionnée et positionnée de façon à ce que, lorsque le chariot 20 se déplace le long de son rail de guidage dans la direction de la butée 34, la pièce mobile 25 entre en contact avec la butée 34 et, inversement, lorsque le chariot 20 se déplace le long de son rail de guidage dans la direction de la butée 36, la pièce mobile 25 entre en contact avec la butée 36. Lorsque le chariot se déplace selon la première direction, il va de la butée 36 à la butée 34. Dés que la pièce mobile entre en contact avec la butée 34, elle est poussée et coulisse dans la cavité 23 de façon à ce que le premier engrenage 26 s'écarte du premier brin 42 de la chaîne 40 et se désolidarise de lui tandis que le second engrenage 24 se rapproche du second brin 43 de la chaine 40 jusqu'à ce qu'il coopère avec lui. Ce qui revient à dire que lorsque un des moyens mobiles d'accrochage 24 ou 26 se désolidarise d'un brin, l'autre moyen mobile d'accrochage 24 ou 26 coopère avec l'autre brin. Inversement, lorsque le chariot 20 se déplace le long de son rail de guidage dans la direction de la butée 36, la pièce mobile entre en contact avec la butée 36, elle est poussée par elle et coulisse dans la cavité 23 de façon à ce que l'engrenage 24 s'écarte du brin 43 de la chaîne et se désolidarise de lui tandis que l'engrenage 26 se rapproche du brin 42 de la chaîne jusqu'à coopérer avec lui. La pièce mobile 25 passe d'une position stable à l'autre lorsqu'elle entre en contact avec les butées 34 et 36. A cet effet et, pour que le déplacement de la chaîne 40 ne soit pas freiné au moment du contact, les butées 34 et 36 sont équipées respectivement d'une lame élastique 44 et 46 pour que lorsqu'elles entrent en contact l'une avec l'autre, l'effort entre les deux augmentent progressivement. De plus, cet effet est accentué par la forme et le dimensionnement de la pièce mobile 25. Pour cela, la face de la pièce mobile qui entre en contact avec la lame présente une pente sur laquelle la butée entre en contact. Les butées 34 et 36 munies de leur lames respectives 44 et 46 permettent l'inversion du sens de déplacement en translation du chariot en déplaçant les moyens mobiles d'accrochage du chariot d'un brin 42 à l'autre brin 43 de la chaîne et inversement. Grâce au dispositif selon l'invention, les moyens d'inversion du sens de déplacement en translation du chariot sont actionnés automatiquement pendant la rotation du chariot autour de ladite conduite sans intervention de l'opérateur.

Le fonctionnement du dispositif selon l'invention va à présent être décrit. Une fois que le dispositif 10 est mis en place autour de la conduite grâce aux moyens de fixation comprenant en outre les deux chaînes 65 et 67 montées fermées autour de la circonférence de la conduite de part et d'autre de la partie à réparer, l'opérateur place les butées 36 et 34 des tubes positionneur sur les trous séparés d'une distance correspondant à la longueur désirée de réparation maximum. L'opérateur débraye les moyens d'entraînement du chariot en translation grâce à l'embrayage 41 et place le chariot contre une première butée 36. Le chariot pourrait aussi bien être placé en premier contre la butée 34 sans que cela influe sur l'objet de l'invention. L'opérateur actionne la rotation du dispositif autour de la conduite sur un tour complet afin d'effectuer un tour mort de bande autour de la conduite. Il actionne ensuite l'embrayage 41 afin d'embrayer les moyens d'entraînement du chariot en translation le long de ses rails de guidage et dans le sens longitudinal de la conduite. Les pignons 35 et 37 font alors tourner la chaîne 40 et le chariot est entraîné par l'engrenage 26 qui coopère avec le brin 42 de la chaîne. A chaque rotation de 360 degrés du dispositif autour de la conduite, le chariot avance selon une première direction d'un pas prédéterminé et de préférence égal à une demi largeur de bande. La bande s'enroule en hélice et en se chevauchant autour de la conduite pour former une première couche jusqu'à ce que la pièce mobile 25 du chariot 20 entre en contact avec la butée 36. La pièce mobile 25 se déplace alors en coulissant dans la cavité 23 de façon à ce que l'engrenage 24 s'écarte de la chaîne 40 tandis que l'engrenage 26 s'en rapproche jusqu'à ce qu'il coopère avec le brin 43 de la chaîne. La coopération étant maintenue grâce à l'attraction des deux aimants 45 et 50. La rotation du dispositif autour de la conduite se poursuit de façon continue et le chariot entraîné par le brin 43 de la chaîne avance selon la direction de sens opposé à la première. La bande s'enroule en hélice et en se chevauchant autour de la conduite pour former une seconde couche superposée à la première couche jusqu'à ce que la pièce mobile 25 du chariot 20 entre en contact avec la butée 34 et ainsi de suite pour les couches suivantes.

Si l'on souhaite effectuer un enroulement de plusieurs couches de bandes de renforcement autour de la conduite sous forme de pyramide, chaque couche doit alors recouvrir une longueur de conduite inférieure à la longueur de recouvrement de la couche précédente. Cette opération est possible grâce aux butées 34 et 36 qui peuvent être déplacées et bloquées selon plusieurs positions sur les tubes positionneurs 14 et 16 à l'aide des doigts d'indexage 54 et 56. Ainsi, après chaque inversion du sens de déplacement en translation du chariot, la butée 34 ou 36 de laquelle le chariot s'éloigne est déplacée d'un pas dans la direction de l'autre butée, la distance d'un pas correspondant à la distance qui sépare deux trous consécutifs sur le tube. Le déplacement de la butée doit être effectué une fois que le chariot s'est suffisamment éloigné et dans la direction qui réduit la distance qui sépare les deux butées 34 et 36. Les moyens pour coulisser et pour bloquer des butées 34 et 36 après chaque passage du chariot sont actionnés manuellement par un opérateur ou bien de façon automatique sans l'intervention d'un opérateur par exemple par un automate commandé à distance. Le fait de pouvoir enrouler la bande sous forme de pyramide autour de la conduite sans démonter le dispositif d'enroulement et de façon symétrique par rapport à la zone de réparation est un avantage non négligeable du dispositif selon l'invention. En effet, l'enroulement d'une bande sous forme de pyramide permet à la conduite de se dilater sous l'effet de la pression et de la température et évite l'étranglement de la bande autour de la conduite à la frontière de la zone d'enroulement. Cette façon d'enrouler la bande fait maintenant partie des standards ASME PCC-2 et ISO/TS 24.817 en matière de méthode pour réparer les conduites et le dispositif selon l'invention permet donc d'être conforme à ces standards.

La dernière couche de bande peut également se terminer par un tour mort de la bande 32 autour de la circonférence de la conduite. Le dispositif 10 est ensuite retiré de la conduite.

Selon une alternative de réalisation de l'invention non représentée par les figures, l'embrayage 41 est placé sur le chariot et permet de débrayer les moyens d'entraînement du chariot en translation en déconnectant l'attraction des aimants 45 et 50 et en plaçant la pièce mobile 25 de sorte qu'aucun des engrenages 24 et 26 coopère avec la chaîne.

## Revendications

1. Dispositif d'enroulement (10) d'une bande de renforcement sur une longueur de réparation de part et d'autre d'une partie à réparer (61) d'une conduite (60) comprenant :
- un chariot (20) solidaire d'un porte-bobine (30),
- une bobine de bande de renforcement (32) enroulée sur ledit porte-bobine,
- des moyens d'entraînement dudit chariot en rotation (65, 15, 67, 17, 12, 13) autour de la circonférence de ladite conduite et en translation (20, 40, 24, 26, 35, 37) selon l'axe longitudinal de ladite conduite de façon à ce que ladite bande s'enroule autour de ladite conduite sous forme d'une hélice,
- des moyens d'inversion (34, 44, 36, 46) du sens de déplacement en translation dudit chariot de sorte qu'à chaque changement de sens, ledit chariot se déplace dans une direction de sens opposé à la précédente et une couche de bande de renforcement est enroulée autour de ladite conduite en se superposant à la précédente couche,
**Caractérisé en ce que** :
- les moyens d'entraînement dudit chariot en translation comprennent en outre une chaîne de convoyage (40) comportant deux brins (42, 43) se déplaçant entre un premier pignon (35) et un second pignon (37) dans des directions de sens opposés, des moyens mobiles d'accrochage (24, 26) dudit chariot sur ladite chaîne adaptés pour coopérer avec lesdits brins de la chaine,
- et **en ce que** lesdits moyens d'inversion déplacent les moyens mobiles d'accrochage dudit chariot d'un brin (42) à l'autre brin (43) et inversement de sorte que lorsque un des moyens mobile d'accrochage (24 ou 26) se désolidarise d'un brin, l'autre moyen mobile d'accrochage (24 ou 26) coopère avec l'autre brin, lesdits moyens d'inversion étant ainsi actionnés automatiquement pendant la rotation dudit chariot autour de ladite conduite.

2. Dispositif selon la revendication 1 dans lequel les moyens mobiles d'accrochage (24, 26) dudit chariot sont deux engrenages fixés sur une pièce mobile (25) coulissante dans une cavité (23) dudit chariot et aptes à coopérer chacun avec respectivement les brins (42, 43) de ladite chaîne (40).

3. Dispositif selon la revendication 2, dans lequel lesdits moyens d'inversion comprennent deux butées (34, 36) équipées chacune respectivement d'une lame élastique (44, 46) et deux tubes positionneurs (14, 16) munis de trous (114, 116), lesdites butées (34, 36) étant bloquées chacune respectivement dans lesdits trous (114 ou 116) desdits tubes positionneurs (14, 16).

4. Dispositif selon la revendication 2 ou 3, dans lequel ledit chariot (20) coulisse dans les deux sens le long de moyens de guidage tel qu'au moins un rail de guidage (28, 29), parallèle à l'axe longitudinal de ladite conduite (60), ledit chariot étant limité dans son déplacement le long desdits rails de guidage par lesdites butées (34 et 36).

5. Dispositif selon la revendication 4, dans lequel ladite pièce mobile est dimensionnée et positionnée de façon à ce que, lorsque ledit chariot (20) se déplace le long de son rail de guidage dans la direction de la dite butée (34), ladite pièce mobile (25) entre en contact avec ladite butée (34), elle est poussée par elle et coulisse dans la cavité (23) de façon à ce que l'engrenage (26) s'écarte du brin (42) de la chaîne et se désolidarise de lui tandis que ledit engrenage (24) se rapproche dudit brin (43) de la chaîne jusqu'à coopérer avec lui, et inversement lorsque ledit chariot (20) se déplace le long de son rail de guidage dans la direction de la dite butée (36), ladite pièce mobile entre en contact avec ladite butée (36), elle est poussée par elle et coulisse dans la cavité (23) de façon à ce que ledit engrenage (24) s'écarte du brin (43) de la chaîne et se désolidarise de lui tandis que ledit engrenage (26) se rapproche dudit brin (42) de la chaîne jusqu'à coopérer avec lui.

6. Dispositif selon la revendication 5, dans lequel, lorsque lesdits engrenages (24, 26) coopèrent respectivement avec lesdits brins (43, 42), ladite pièce mobile (25) est dans une position stable maintenue par l'attraction d'un aimant (45) solidaire de la pièce mobile et d'un aimant (50) solidaire du chariot.

7. Dispositif selon l'une des revendications 3 à 6, dans lequel lesdites butées (34, 36) sont munies de moyens pour coulisser respectivement le long desdits tubes positionneurs (14, 16) et de moyens pour se bloquer à des positions différentes correspondant à un des trous (114) dudit tube (14) ou un des trous (116) dudit tube (16), lesdits trous (114, 116) étant séparés des trous adjacents d'un pas égal.

8. Dispositif selon la revendication 7, dans lequel, après chaque inversion du sens de déplacement dudit chariot (20), ladite butée (34 ou 36) de laquelle ledit chariot s'éloigne est déplacée d'un pas dans la direction de ladite autre butée (34, 36) de façon à ce que chaque couche de bandes recouvre une longueur de conduite inférieure à la longueur de recouvrement de la couche précédente.

9. Dispositif selon l'une des revendications 7 ou 8, dans lequel lesdits moyens pour coulisser et pour bloquer lesdites butées (34, 36) comprennent un doigt d'indexage (54, 56) monté sur ressort qui, lorsqu'il est tiré, autorise le déplacement desdites butées le long de leur tube positionneur respectif (14, 16) et lorsqu'il est lâché et positionné devant un desdits trous (114, 116) bloque ladite butée sur ledit tube (14, 16).

10. Dispositif selon l'une des revendications 7, 8 ou 9, dans lequel lesdits moyens pour coulisser et pour bloquer lesdites butées (34, 36) sont actionnés manuellement par un opérateur.

11. Dispositif selon l'une des revendications 7, 8 ou 9, dans lequel lesdits moyens pour coulisser et pour bloquer lesdites butées (34, 36) sont actionnés de façon automatique sans l'intervention d'un opérateur.

12. Dispositif selon l'une des revendications précédentes, dans lequel lesdits moyens d'entrainement dudit chariot en rotation autour de ladite conduite comprennent deux pignons (15, 17) situés chacun aux deux extrémités du dispositif et engagés chacun respectivement dans une chaine (65, 67), lesdites chaînes (65 et 67) étant fermées autour de la circonférence extérieure de ladite conduite (60) et placées de part et d'autre de la partie à réparer (61) de ladite conduite.

13. Dispositif selon la revendication 12, dans lequel lesdits moyens d'entraînement en translation dudit chariot sont reliés à au moins un des deux pignons (15 et 17) par un système d'engrenage de telle sorte que le mouvement de rotation dudit dispositif (10) entraîne le mouvement de translation dudit chariot.

14. Dispositif selon la revendication 13, dans lequel les moyens d'entraînement en translation dudit chariot (20) peuvent être débrayés grâce à un embrayage (41).

15. Dispositif selon l'une des revendications 13 ou 14 dans lequel lesdits pignons (15 et 17) sont dimensionnés de façon à ce qu'à chaque tour du dispositif autour de la conduite, ledit chariot avance d'un pas régulier de longueur égale à la moitié de la largeur de ladite bande (32).

16. Dispositif selon l'une des revendications précédentes comprenant un jeu de roues (18 et 19) situé à chacune de ses extrémités.

17. Dispositif selon l'une des revendications précédentes, dans lequel ladite chaîne de convoyage (40) est une chaîne à rouleaux en acier inoxydable.

18. Dispositif selon l'une des revendications précédentes, dans lequel lesdits moyens d'entraînement dudit chariot en rotation autour de ladite conduite (60) comprennent deux demi-volants (12, 13) situés chacun aux deux extrémités du dispositif et actionnés par au moins un opérateur.

## Patentansprüche

1. Vorrichtung zum Wickeln (10) eines Verstärkungsbandes auf eine Reparaturlänge beiderseits eines zu reparierenden Teils (61) einer Leitung (60), umfassend:
- einen Schlitten (20), der mit einem Spulenträger (30) fest verbunden ist,
- eine Verstärkungsbandspule (32), die auf den Spulenträger gewickelt ist,
- Mittel zum Antrieb des Schlittens zur Rotation (65, 15, 67, 17, 12, 13) um den Umfang der Leitung und zur Translation (20, 40, 24, 26, 35, 37) entlang der Längsachse der Leitung, so dass sich das Band spiralförmig um die Leitung wickelt,
- Mittel zur Umkehrung (34, 44, 36, 46) der Richtung der translatorischen Bewegung des Schlittens, so dass sich bei jeder Richtungsänderung der Schlitten in einer Richtung bewegt, die entgegengesetzt zur vorhergehenden ist, und eine Schicht des Verstärkungsbandes um die Leitung gewickelt wird, indem sie die vorhergehende Schicht überlagert,
**dadurch gekennzeichnet, dass**:
- die Mittel zum Antrieb des Schlittens zur Translation außerdem eine Förderkette (40), die zwei Trums (42, 43) aufweist, die sich zwischen einem ersten Ritzel (35) und einem zweiten Ritzel (37) in entgegengesetzten Richtungen bewegen, und bewegliche Mittel zum Anhängen (24, 26) des Schlittens an der Kette, die dafür eingerichtet sind, mit den Trums der Kette zusammenzuwirken, umfassen,
- und dadurch, dass die Mittel zur Umkehrung die beweglichen Mittel zum Anhängen des Schlittens von einem Trum (42) zum anderen Trum (43) und umgekehrt bewegen, so dass, wenn eines der beweglichen Mittel zum Anhängen (24 oder 26) sich von einem Trum löst, das andere bewegliche Mittel zum Anhängen (24 oder 26) mit dem anderen Trum zusammenwirkt, wobei die Mittel zur Umkehrung während der Rotation des Schlittens um die Leitung auf diese Weise automatisch betätigt werden.

2. Vorrichtung nach Anspruch 1, wobei die beweglichen Mittel zum Anhängen (24 oder 26) des Schlittens zwei Verzahnungen sind, die an einem beweglichen Teil (25) befestigt sind, das in einem Hohlraum (23) des Schlittens gleitet, und die geeignet ist, jeweils mit einem der Trums (42, 43) der Kette (40) zusammenzuwirken.

3. Vorrichtung nach Anspruch 2, wobei die Mittel zur Umkehrung zwei Anschläge (34, 36), die jeweils mit einer elastischen Lamelle (44, 46) ausgestattet sind, und zwei mit Löchern (114, 116) versehene Positionierrohre (14, 16) umfassen, wobei die Anschläge (34, 36) in den Löchern (114 oder 116) jeweils eines der Positionierrohre (14, 16) blockiert werden.

4. Vorrichtung nach Anspruch 2 oder 3, wobei der Schlitten (20) in den zwei Richtungen entlang von Führungsmitteln gleitet, wie etwa von wenigstens einer Führungsschiene (28, 29), die zur Längsachse der Leitung (60) parallel ist, wobei der Schlitten in seiner Bewegung entlang der Führungsschienen durch die Anschläge (34 oder 36) begrenzt wird.

5. Vorrichtung nach Anspruch 4, wobei das bewegliche Teil so bemessen und positioniert ist, dass, wenn sich der Schlitten (20) entlang seiner Führungsschiene in der Richtung des Anschlags (34) bewegt, das bewegliche Teil (25) mit dem Anschlag (34) in Kontakt kommt, es von ihm geschoben wird und in dem Hohlraum (23) gleitet, derart, dass sich die Verzahnung (26) von dem Trum (42) der Kette entfernt und sich von ihm löst, während sich die Verzahnung (24) dem Trum (43) der Kette nähert, bis sie mit ihm zusammenwirkt, und umgekehrt, wenn sich der Schlitten (20) entlang seiner Führungsschiene in der Richtung des Anschlags (36) bewegt, das bewegliche Teil mit dem Anschlag (36) in Kontakt kommt, es von ihm geschoben wird und in dem Hohlraum (23) gleitet, derart, dass sich die Verzahnung (24) von dem Trum (43) der Kette entfernt und sich von ihm löst, während sich die Verzahnung (26) dem Trum (42) der Kette nähert, bis sie mit ihm zusammenwirkt.

6. Vorrichtung nach Anspruch 5, wobei, wenn die Verzahnungen (24, 26) jeweils mit einem der Trums (43, 42) zusammenwirken, das bewegliche Teil (25) sich in einer stabilen Position befindet, die durch die Anziehungskraft eines mit dem beweglichen Teil fest verbundenen Magneten (45) und eines mit dem Schlitten fest verbundenen Magneten (50) aufrechterhalten wird.

7. Vorrichtung nach einem der Ansprüche 3 bis 6, wobei die Anschläge (34, 36) mit Mitteln zum Gleiten entlang des jeweiligen Positionierrohres (14, 16) und mit Mitteln zu ihrer Arretierung an verschiedenen Positionen, die einem der Löcher (114) des Rohres (14) oder einem der Löcher (116) des Rohres (16) entsprechen, versehen sind, wobei die Löcher (114, 116) von den benachbarten Löchern durch gleiche Abstände getrennt sind.

8. Vorrichtung nach Anspruch 7, wobei nach jeder Umkehrung der Bewegungsrichtung des Schlittens (20) der Anschlag (34 oder 36), von dem sich der Schlitten entfernt, um einen Lochabstand in der Richtung des anderen Anschlags (34, 36) verlagert wird, so dass jede Schicht von Bändern eine Leitungslänge bedeckt, die kleiner als die Überdeckungslänge der vorhergehenden Schicht ist.

9. Vorrichtung nach einem der Ansprüche 7 oder 8, wobei die Mittel zum Gleiten und zum Arretieren der Anschläge (34, 36) einen federnd gelagerten Indexierfinger (54, 56) umfassen, der, wenn er gezogen ist, die Bewegung der Anschläge entlang ihres jeweiligen Positionierrohres (14, 16) ermöglicht, und wenn er losgelassen und vor einem der Löcher (114, 116) positioniert wird, den Anschlag auf dem Rohr (14, 16) arretiert.

10. Vorrichtung nach einem der Ansprüche 7, 8 oder 9, wobei die Mittel zum Gleiten und zum Arretieren der Anschläge (34, 36) manuell von einem Bediener betätigt werden.

11. Vorrichtung nach einem der Ansprüche 7, 8 oder 9, wobei die Mittel zum Gleiten und zum Arretieren der Anschläge (34, 36) automatisch ohne Eingriff eines Bedieners betätigt werden.

12. Vorrichtung nach einem der vorhergehenden Ansprüche, wobei die Mittel zum Antrieb des Schlittens zur Rotation um die Leitung zwei Ritzel (15, 17) umfassen, die sich jeweils an einem der zwei Enden der Vorrichtung befinden und jeweils in eine Kette (65, 67) eingreifen, wobei die Ketten (65 und 67) um den Außenumfang der Leitung (60) herum geschlossen sind und beiderseits des zu reparierenden Teils (61) der Leitung angeordnet sind.

13. Vorrichtung nach Anspruch 12, wobei die Mittel zum Antrieb des Schlittens zur Translation mit wenigstens einem der zwei Ritzel (15 und 17) durch ein Verzahnungssystem verbunden sind, derart, dass die Rotationsbewegung der Vorrichtung (10) die Translationsbewegung des Schlittens antreibt.

14. Vorrichtung nach Anspruch 13, wobei die Mittel zum Antrieb des Schlittens (20) zur Translation durch eine Kupplung (41) ausgekuppelt werden können.

15. Vorrichtung nach einem der Ansprüche 13 oder 14, wobei die Ritzel (15 und 17) so bemessen sind, dass sich der Schlitten bei jedem Umlauf der Vorrichtung um die Leitung um einen gleichen Abstand vorwärtsbewegt, dessen Länge gleich der Hälfte der Breite des Bandes (32) ist.

16. Vorrichtung nach einem der vorhergehenden Ansprüche, welche einen Satz von Rädern (18 und 19) umfasst, der sich an ihren beiden Enden befindet.

17. Vorrichtung nach einem der vorhergehenden Ansprüche, wobei die Förderkette (40) eine Rollenkette aus nichtrostendem Stahl ist.

18. Vorrichtung nach einem der vorhergehenden Ansprüche, wobei die Mittel zum Antrieb des Schlittens zur Rotation um die Leitung (60) zwei halbkreisförmige Lenkräder (12, 13) umfassen, die sich jeweils an einem der zwei Enden der Vorrichtung befinden und von wenigstens einem Bediener betätigt werden.

## Claims

1. A winding device (10) for winding a reinforcing strip onto a repair length on either side of a portion to be repaired (61) of a pipe (60) comprising:
- a carriage (20) rigidly connected to a reel holder (30),
- a reel of reinforcing strip (32) wound onto said reel holder,
- means (65, 15, 67, 17, 12, 13) for rotating said carriage around the circumference of said pipe and means (20, 40, 24, 26, 35, 37) for translating same along the longitudinal axis of said pipe so that said strip is wound around said pipe in the form of a helix,
- means (34, 44, 36, 46) for reversing the direction of the translation movement of said carriage so that, at each change of direction, said carriage moves in a direction opposite to the previous one and a layer of reinforcing strip is wound around said pipe, overlapping the previous layer,
**characterized in that**:
- the means for translating said carriage further comprise a conveyor chain (40) comprising two strands (42, 43) moving between a first sprocket (35) and a second sprocket (37) in opposite directions, mobile means (24, 26) for attachment of the carriage to the chain adapted to cooperate with the strands of the chain.
- and **in that** the reversing means move the mobile attachment means of said carriage from one strand (42) to the other strand (43) and vice versa so that, when one of the mobile attachment means (24 or 26) becomes detached from one strand, the other mobile attachment means (24 or 26) cooperates with the other strand, said reversing means thus being actuated automatically during the rotation of said carriage around said pipe.

2. The device according to claim 1, wherein the mobile attachment means (24, 26) of said carriage are two gears fixed on a mobile part (25) sliding in a cavity (23) of said carriage and each capable of cooperating with the strands (42, 43) respectively of said chain (40).

3. The device according to claim 2, wherein said reversing means comprise two stops (34, 36) each equipped with an elastic blade (44, 46) and two positioning tubes (14, 16), respectively, provided with holes (114, 116), said stops (34, 36) each being locked in said holes (114 or 116) of said positioning tubes (14, 16), respectively.

4. The device according to claim 2 or 3, wherein said carriage (20) slides in the two directions along guide means, such as at least one guide rail (28, 29), parallel to the longitudinal axis of said pipe (60), said carriage being limited in its movement along said guide rails by said stops (34 and 36).

5. The device according to claim 4, wherein said mobile part is sized and positioned so that, when said carriage (20) moves along its guide rail in the direction of said stop (34), said mobile part (25) comes into contact with said stop (34), it is pushed by it and slides in the cavity (23) so that the gear (26) moves away from the chain strand (42) and is detached from it while said gear (24) approaches said strand (43) of the chain until it cooperates with it, and vice versa when said carriage (20) moves along its guide rail in the direction of said stop (36), said mobile part comes into contact with said stop (36), it is pushed by it and slides in the cavity (23) so that said gear (24) moves away from the strand (43) of the chain and is detached from it while said gear (26) approaches said strand (42) of the chain to cooperate with it.

6. The device according to claim 5, wherein, when said gears (24, 26) cooperate with said strands (43, 42), respectively, said mobile part (25) is in a stable position maintained by the attraction of a magnet (45) rigidly connected to the mobile part and a magnet (50) rigidly connected to the carriage.

7. The device according to one of claims 3 to 6, wherein said stops (34, 36) are provided with means for sliding along said positioning tubes (14, 16), respectively, and with means for locking at different positions corresponding to one of the holes (114) of said tube (14) or one of the holes (116) of said tube (16), said holes (114, 116) being separated from the adjacent holes by an equal pitch.

8. The device according to claim 7, wherein, after each reversal of the direction of movement of said carriage (20), said stop (34 or 36) from which said carriage moves away is moved one pitch in the direction of said other stop (34, 36) so that each layer of strips covers a length of pipe less than the overlapping length of the previous layer.

9. The device according to either of claims 7 and 8, wherein said means for sliding and for locking said stops (34, 36) comprise an indexing finger (54, 56) mounted on a spring which, when pulled, allows the movement of said stops along their respective positioning tube (14, 16) and when released and positioned in front of one of said holes (114, 116) locks said stop on said tube (14, 16).

10. The device according to any one of claims 7, 8 or 9, wherein said means for sliding and for locking said stops (34, 36) are actuated manually by an operator.

11. The device according to any one of claims 7, 8 or 9, wherein said means for sliding and for locking said stops (34, 36) are actuated automatically without the intervention of an operator.

12. The device according to any one of the preceding claims, wherein said means for rotating said carriage around said pipe comprise two sprockets (15, 17) each located at the two ends of the device and each engaged in a chain (65, 67), respectively, said chains (65 and 67) being closed around the outer circumference of said pipe (60) and placed on either side of the portion to be repaired (61) of said pipe.

13. The device according to claim 12, wherein said drive means for translating said carriage are connected to at least one of the two sprockets (15 and 17) by a gear system such that the rotational movement of said device (10) causes the translation movement of said carriage.

14. The device according to claim 13, wherein the means for translating said carriage (20) can be disengaged by means of a clutch (41).

15. The device according to either of claims 13 or 14, in which said sprockets (15 and 17) are sized so that, at each revolution of the device around the pipe, said carriage advances with a regular pitch of length equal to half the width of said strip (32).

16. The device according to any one of the preceding claims, comprising a set of wheels (18 and 19) located at each of its ends.

17. The device according to any one of the preceding claims, in which said conveyor chain (40) is a stainless steel roller chain.

18. The device according to any one of the preceding claims, in which said means for rotating said carriage around said pipe (60) comprise two half-flywheels (12, 13) each located at both ends of the device and actuated by at least one operator.
